# EUROPEAN PATENT APPLICATION

(11) **EP 1 138 532 A1**
(43) Date of publication of application: **04.10.2001**
(21) Application number: 00102210.2
(22) Date of filing: 10.02.2000
(51) Int. Cl.: B60H 1/00

(54) **Air conditioning system for automobile and door assembly thereof**

(71) Applicant: Korea Delphi Automotive Systems Corporation, Dalsunggun Taegu (KR)
(72) Inventor: Jung, Ik-Jin, Dalseo-gu, Taegu (KR); Suk, Sang-heon, Dalseo-gu, Taegu (KR); Park, Jin-chul, Seo-gu, Taegu (KR); Lee, In-jun, Susung-gu, Taegu (KR)
(74) Representative: Beetz & Partner Patentanwälte

(57) **Abstract**

Disclosed is an air conditioning system for an automobile comprising an intake unit (IU) having a blower fan (2) and a motor (M) therefor; and a temperature adjusting control unit (RU). The intake unit and the temperature adjusting control unit being connected with each other by an air supplying connection part (C), such that their leftward and rightward positions can be selected. The temperature adjusting control unit having an evaporator (3) and a heater (4) located in an air flowing path defined in a housing (H) which occupies a single space.

## Description

### BACKGROUND OF THE INVENTION

### Field of the Invention

The present invention relates to an air conditioning system for an automobile and a door assembly thereof, and more particularly, the present invention relates to an air conditioning system for an automobile and a door assembly thereof, in which structures of doors respectively provided in a plurality of openings defined in an air conditioning passage of the automobile, for controlling air supply therethrough while being opened and closed, are modified, thereby improving applicability and operability of the air conditioning system.

### Description of the Related Art

Conventionally, an air conditioning system for an automobile has an air conditioning passage which is disposed in a chassis of the automobile for supplying air flow controlled in its amount and temperature into a passenger compartment of the automobile, the air conditioning passage defining a closed flowing space. In the air conditioning passage, there are disposed an evaporator and a heater as temperature adjusting heat exchangers.

Generally, an air conditioning passage is composed of a unit of a plurality of housing bodies which are separately formed, for example, by injection molding, and is disposed in a chassis of an automobile. At an open end of the air conditioning passage, there is installed a door assembly as means for controlling air flow into a passenger compartment of the automobile.

A door assembly of an air conditioning system of the conventional art is constructed such that hinge shafts are provided at both ends of a substantially rectangular door plate. The door assembly is opened and closed due to the fact that the rectangular door plate is rotated at the hinge shafts.

However, in the door assembly of the conventional art which is opened and closed by the rotation of the door plate at the hinge shafts, a size of the air conditioning passage cannot but be considerably enlarged in order to ensure a rotation degree of the door plate which has a predetermined width. Also, since air pressure or driving torque applied to the entire door plate is great, the number of components needed to rotate the door plate and power required to drive the components are increased, whereby it is impossible to make the entire door assembly compact.

Specifically, recently, as a multiple air conditioning system which requires several air conditioning control parts for a front passenger seat and a rear passenger seat as well as for a driver seat, is disclosed in the art, there are caused difficulties in adopting the door plate constructed as mentioned above for the multiple air conditioning system.

Further, in the case that a left mounted air conditioning system and a right mounted air conditioning system are selectively required depending upon a structure of an automobile, compatibility is deteriorated in view of mounting operations for the door plate and a structure of a driving mechanism.

To cope with the problems induced by the door plate of the conventional art, a technique for constructing a door such that the door is wound around and unwound from a winding roll and through at least one guide roll and the door has a shape of a film, portions of which are punctured, is disclosed in the art. However, this door still suffers from defects in that since separate power units for driving respective rolls are required and guide means, closing means, etc. are much complicated in their structures, the door can be applied only to a deluxe car, whereby universality of the door is diminished.

Hereinafter, air conditioning systems for an automobile and door assemblies thereof according to the conventional art will be described in detail with reference to FIGs. 1 through 3. FIG. 1 is a view schematically illustrating a construction of an air conditioning system for an automobile; FIG. 2 is a perspective view illustrating an embodiment of an air conditioning system for an automobile and a door assembly thereof, of the conventional art; and FIGs. 3A and 3B are respectively a partially broken-away perspective view and a cross-sectional view illustrating another embodiment of an air conditioning system for an automobile and a door assembly thereof, of the conventional art.

In an air conditioning passage 1 composed of a plurality of separate air conditioning cases, there are disposed a blower fan 2, an evaporator 3, a heater 4 and a plurality of door plates as being operating doors. The plurality of door plates include as main operating doors a heater door plate HT which is placed adjacent to the heater 4 for framing control modes, a vent door plate VT for controlling discharge of air toward a driver seat, and a defrost door plate DF defining a defrosting mode. A temperature adjusting door plate TC is disposed behind the evaporator 3.

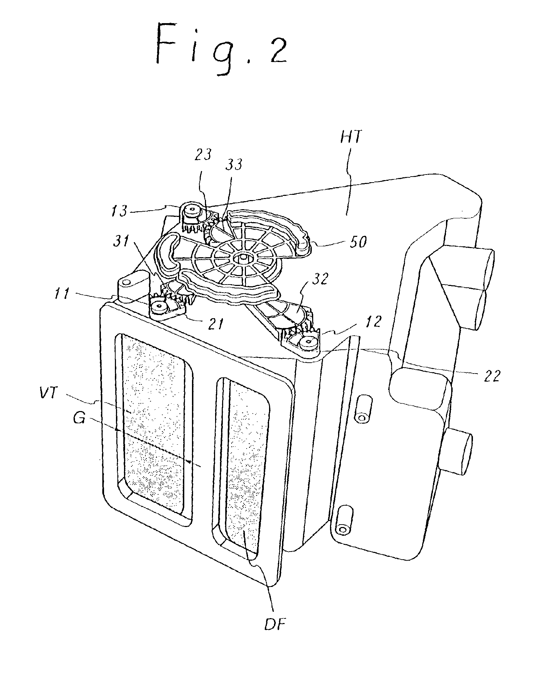

Generally, the respective doors are integrally assembled to a single exemplary air conditioning case 10 in view of convenience and compactness in their constructions, thereby to define an appearance as shown in FIG. 2.

In FIG. 2, the heater door plate HT, vent door plate VT and defrost door plate DF are mounted to the air conditioning case 10, and driving levers 21, 22 and 23 are fixedly secured to one end of each of the hinge shafts 11, 12 and 13, respectively, which project out of the air conditioning case 10.

Three intermediate levers 31, 32 and 33 are also rotatably secured to the air conditioning case 10 adjacent to the driving levers 21, 22 and 23, respectively. The intermediate levers 31, 32 and 33 are meshed with the driving levers 21, 22 and 23, respectively, and are formed with three upright engaging pins 41, 42 and 43, respectively.

By the fact that the upright engaging pins 41, 42 and 43 are inserted into guide grooves 51, 52 and 53, respectively, which are formed in a driving plate 50, the intermediate levers 31, 32 and 33 are connected to the driving plate 50 so that they can rotate by the rotation of the driving plate 50. The driving plate 50 is connected by a shaft to an actuator (not shown) such as a vacuum actuator, a motor actuator or the like, to be driven thereby.

Accordingly, because the heater door plate HT, vent door plate VT and defrost door plate DF must be provided with sufficient rotating spaces in their widthwise directions, respectively, and especially, the three door plates must be driven without any interference among themselves, their sizes cannot but be enlarged.

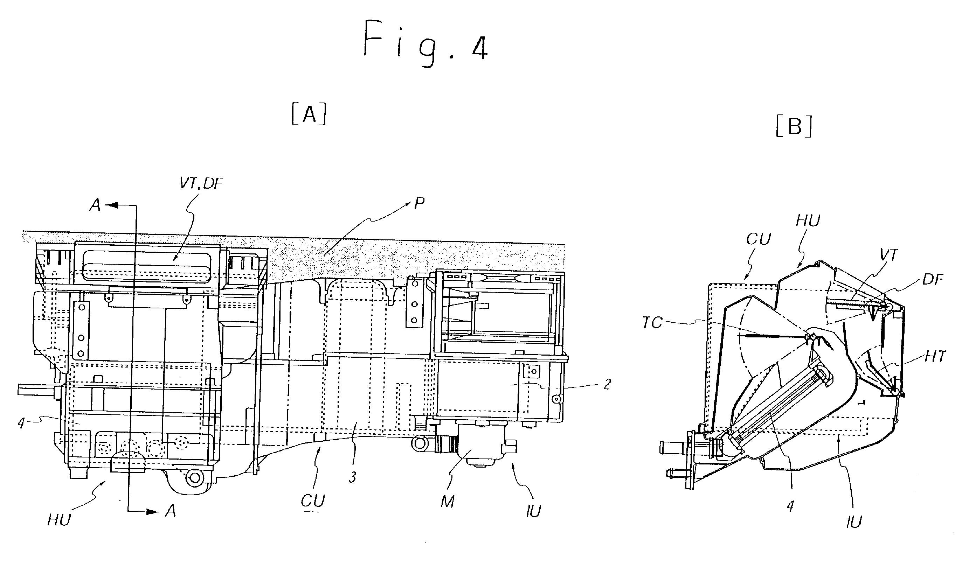

The entire air conditioning system which is realized by the conventional construction is shown in FIGs. 4A and 4B.

The air conditioning system shown in FIGs. 4A and 4B includes an intake unit IU which has the blower fan 2 for sucking outside air and a motor M for driving the blower fan 2, a cooling unit CU which is disposed below an instrument panel P of the automobile and receives therein the evaporator 3 for cooling air sucked by the intake unit IU, and a heating unit HT to which the respective door plates are mounted and in which the heater 4 is arranged. The intake unit IU, cooling unit CU and heating unit HT are constructed by separate air conditioning cases, respectively, and are assembled in a chassis of the automobile such that they are communicated one with another.

In the air conditioning system of the conventional art, constructed as mentioned above, because a flowing distance of air is lengthened and a spatial volume is repeatedly increased and decreased along the flowing distance, noise is generated due to air flow and functionality of flowing air is deteriorated.

Further, in the air conditioning system of the conventional art, since the intake unit IU, cooling unit CU and heating unit HT are separately constructed, a space occupied by the air conditioning system in the chassis is increased, and it is impossible or difficult to install other specific arrangements, for example, an ABS brake system, an air bag, etc. below the instrument panel P.

Accordingly, while it is required that an air conditioning system be compact in its construction, an air conditioning system having a compact construction cannot be achieved in fact with the door plates constructed as mentioned above.

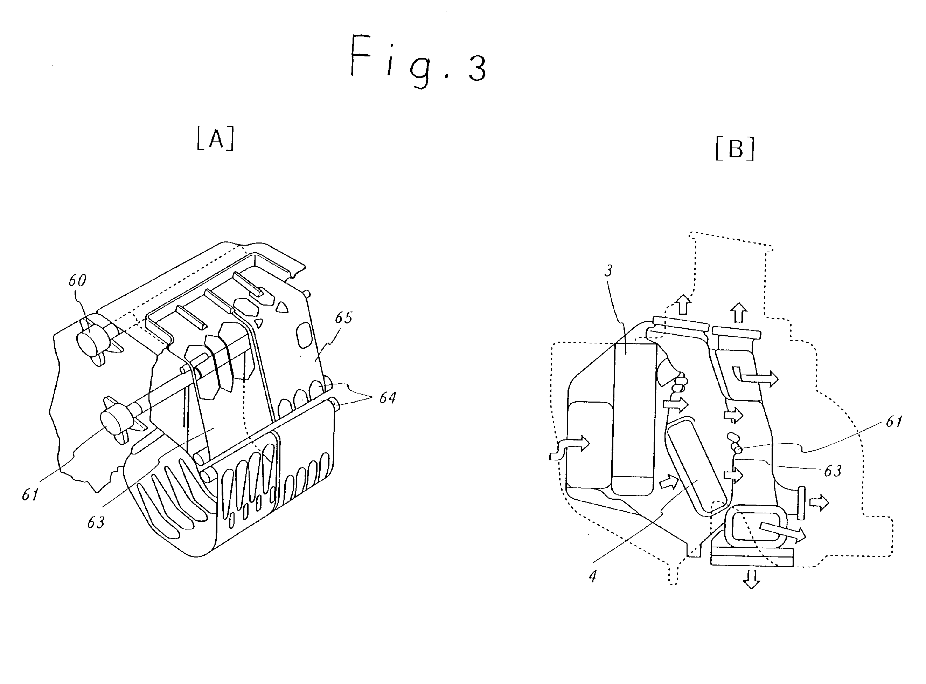

As another solution, a film door type air conditioning system as shown in FIGs. 3A and 3B is disclosed in the art. The film door type air conditioning system has a film door 63 of a film-shaped configuration, which is wound around or unwound from rolling shafts 60 and 61. The film door 63 cooperates with a film guide 65 having a plurality of slits 64, to control opening and closing operations of the air conditioning system.

However, in the film door type air conditioning system, it is difficult to accomplish rigidity through selection of suitable material for the film door 63 and to control operations of the rolling shafts 60 and 61. Also, because costly driving motors are needed for separately driving the rolling shafts 60 and 61, universality is reduced, and additionally, it is difficult to prevent leakage at a boundary region of an open end of an air conditioning passage, whereby practicality of the film door type air conditioning system is lessened.

### SUMMARY OF THE INVENTION

Accordingly, the present invention has been made in an effort to solve the problems occurring in the related art, and an object of the present invention is to provide an air conditioning system for an automobile and a door assembly thereof, which adopts a new opening and closing scheme and has a structure capable of simultaneously air conditioning a plurality of spaces, thereby enhancing operational reliability and improving space efficiency.

In order to achieve the above object, according to one aspect of the present invention, there is provided an air conditioning system for an automobile, having a blower fan, an evaporator, a heater and a door assembly which are disposed in an air conditioning passage defined by a plurality of air conditioning cases, the door assembly controlling air flow through an air supplying opening into a passenger compartment of the automobile, the air conditioning system comprising: an intake unit as being an intake part, the intake unit having the blower fan and a motor therefor; and a control unit as being a temperature adjusting control part, the intake unit and the control unit being connected with each other by an air supplying connection part as being intermediate connection means, such that their leftward and rightward positions can be selected; the control unit having the evaporator and the heater located in an air flowing path defined in a housing which occupies a single space, a guide partition wall for allowing air passing through the evaporator to flow toward or outside the heater, first and second door members which are disposed in front of the heater and between the guide partition wall and a discharging part of the housing, respectively, to cooperate with the guide partition wall thereby to control a temperature of air, and a door unit detachably provided in a plurality of mounting holes defined in the discharging part of the housing, the door unit comprising a plurality of micro valve units of a cartridge or magazine-shaped contour, each micro valve unit having a plurality of plate-shaped door members which are separated one from another and have a reduced rotation radius.

Therefore, the present invention is characterized in that it provides an air conditioning system which has a compact structure and a door assembly which cooperates with the air conditioning system to control an amount of air flowing through the air conditioning system.

In the air conditioning system for an automobile and a door assembly thereof according to the present invention, a plurality of air outlets are arranged in a multitude of directions in a passenger compartment of the automobile, the respective air outlets are capable of being separately controlled and an operating space is considerably reduced to provide a door assembly having a compact structure, whereby it is possible to construct a very concise and compact air conditioning system thereby providing variety in flow control.

In addition, in the air conditioning system for an automobile and a door assembly thereof according to the present invention, due to the fact that a plurality of separated door members are provided, operating air pressures are applied to door members in a distributed manner, thereby minimizing power consumption and ensuring operational reliability of the air conditioning system.

### BRIEF DESCRIPTION OF THE DRAWINGS

The above objects, and other features and advantages of the present invention will become more apparent after a reading of the following detailed description when taken in conjunction with the drawings, in which:

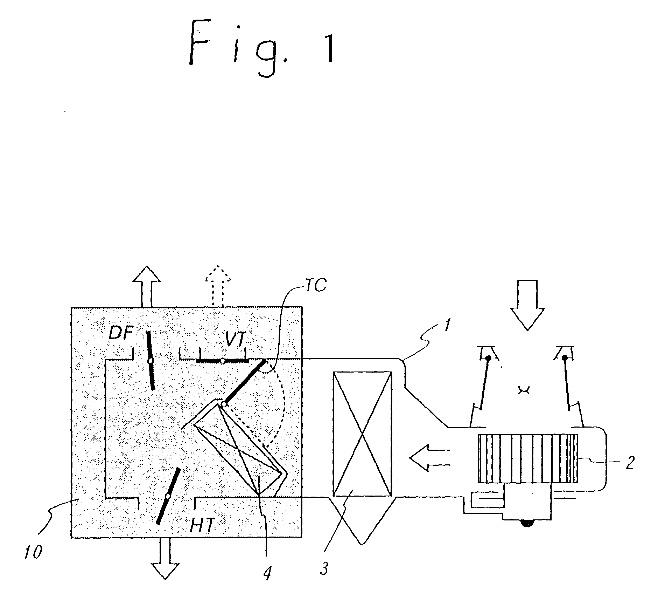

FIG. 1 is a view schematically illustrating a construction of an air conditioning system for an automobile;
FIG. 2 is a perspective view illustrating an embodiment of an air conditioning system for an automobile and a door assembly thereof, of the conventional art;
FIGs. 3A and 3B are respectively a partially broken-away perspective view and a cross-sectional view illustrating another embodiment of an air conditioning system for an automobile and a door assembly thereof, of the conventional art;
FIGs. 4A and 4B are views illustrating an entire structure of an air conditioning system for an automobile, of the conventional art, wherein FIG. 4A is a front view and FIG. 4B is a cross-sectional view taken along the line A-A of FIG. 4A;

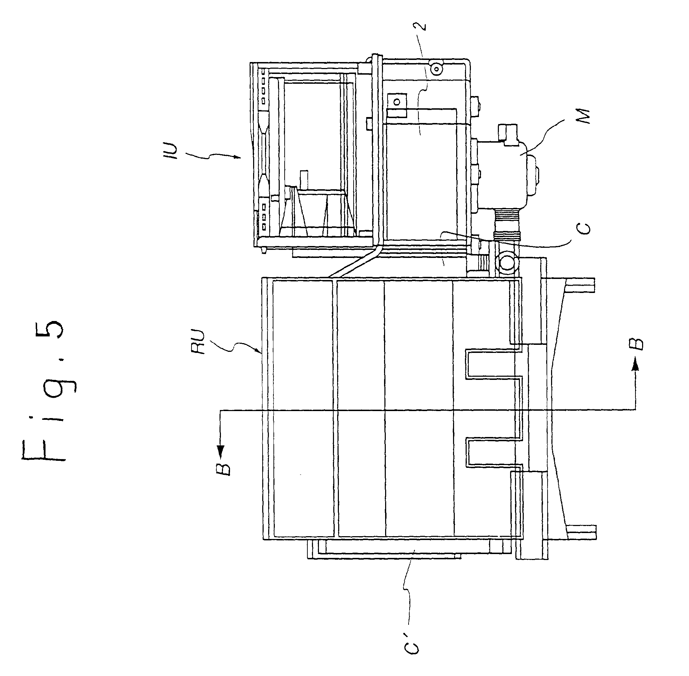

FIG. 5 is a side view illustrating an air conditioning system for an automobile in accordance with the present invention;

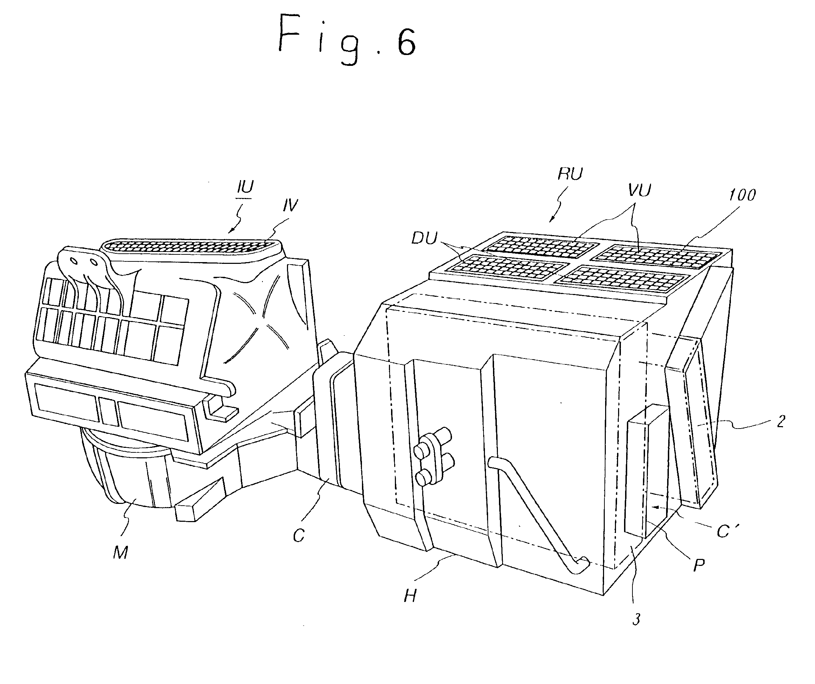

FIG. 6 is a perspective view illustrating the air conditioning system for an automobile in accordance with the present invention;

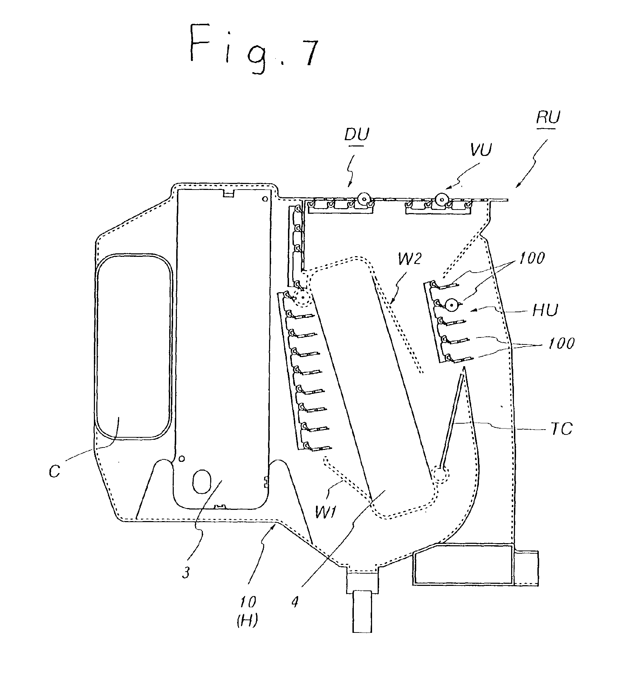

FIG. 7 is a cross-sectional view, taken along the line B-B of FIG. 5, illustrating the air conditioning system for an automobile in accordance with the present invention;

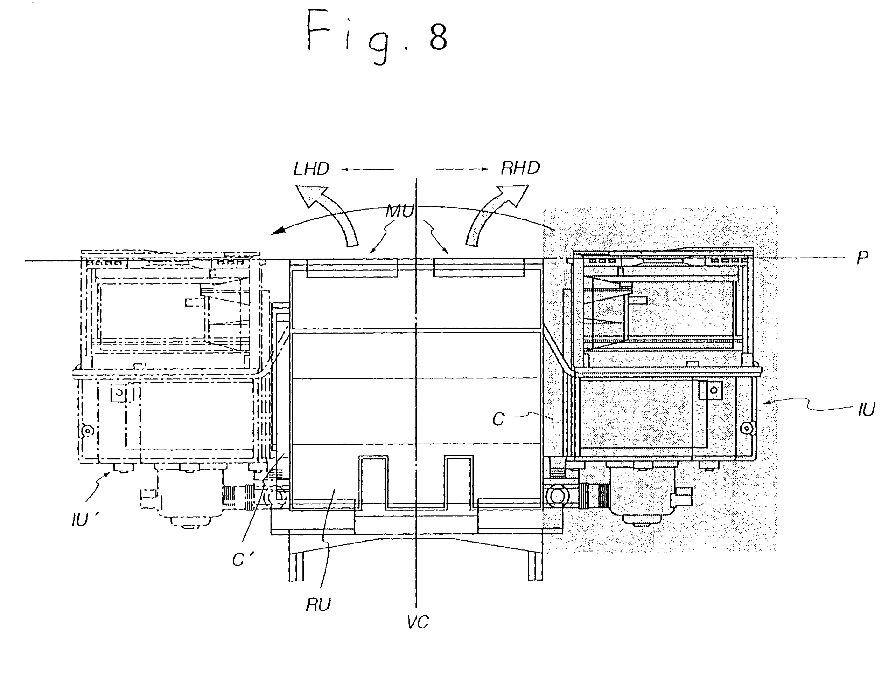

FIG. 8 is a view illustrating a state wherein the air conditioning system for an automobile according to the present invention is applied to a chassis of an automobile;

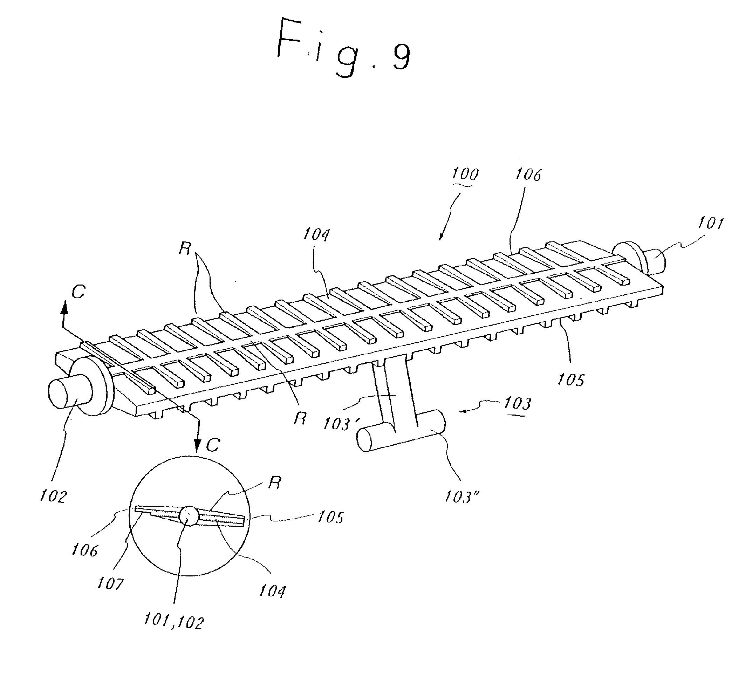

FIG. 9 is a partially enlarged perspective view independently illustrating an appearance of a micro valve as being an operating member which is used in a door assembly for the air conditioning system, in accordance with the present invention;

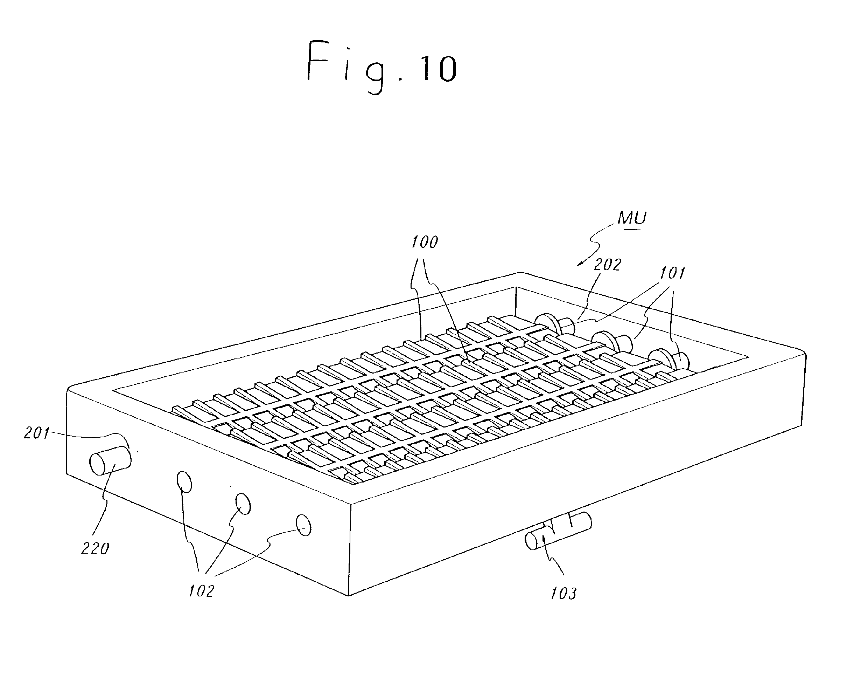

FIG. 10 is a perspective view illustrating a state wherein micro valves are assembled to a frame to define a micro valve unit which is used in the door assembly for the air conditioning system according to the present invention;

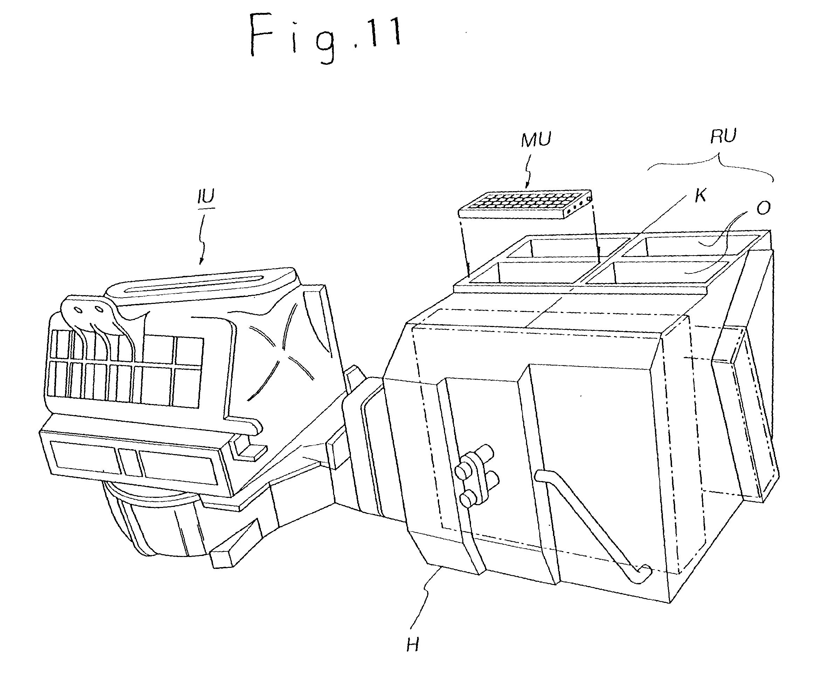

FIG. 11 is a perspective view illustrating a construction by which the micro valve unit is attached to and detached from the air conditioning system according to the present invention;

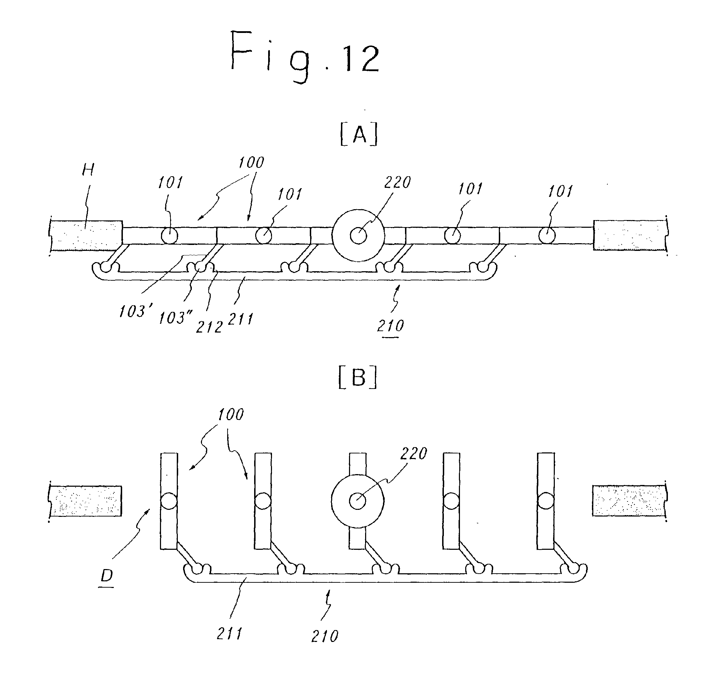

FIGs. 12A and 12B are partial enlarged cross-sectional views illustrating an opened state and a closed state, respectively, of the micro valve as being the operating member which is used in the door assembly for the air conditioning system according to the present invention;

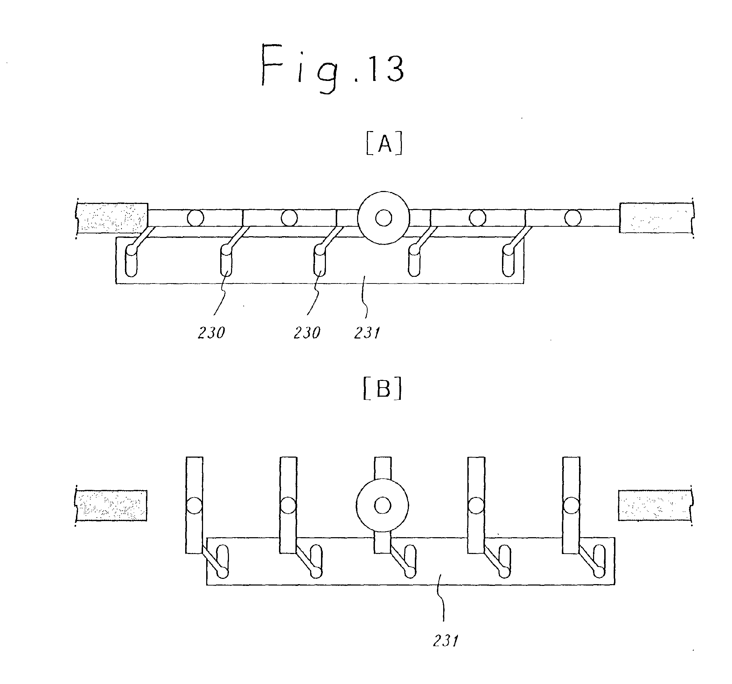

FIGs. 13A and 13B are partial enlarged cross-sectional views illustrating an opened state and a closed state, respectively, of another micro valve as being another operating member which is used in the door assembly for the air conditioning system according to the present invention;

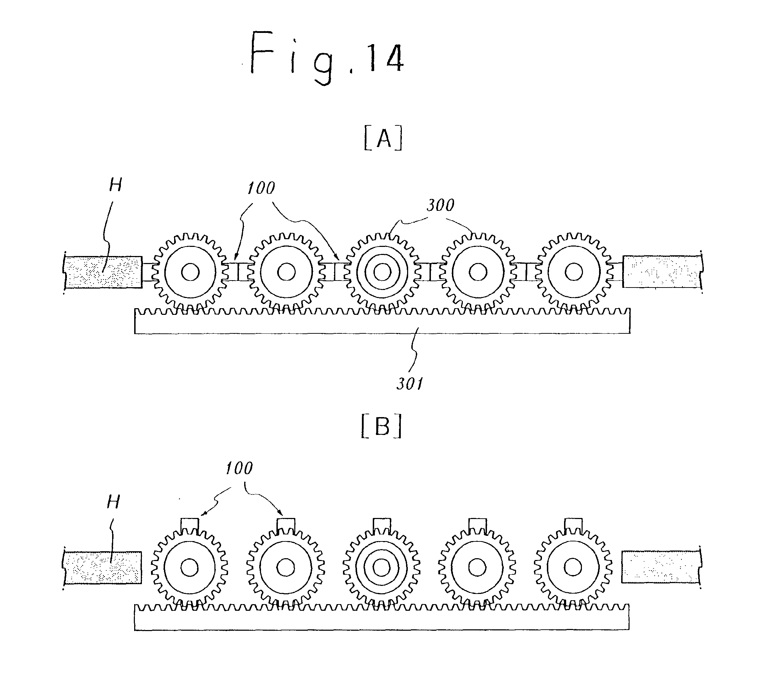

FIGs. 14A and 14B are partial enlarged cross-sectional views illustrating an opened state and a closed state, respectively, of still another micro valve as being still another operating member which is used in the door assembly for the air conditioning system according to the present invention;

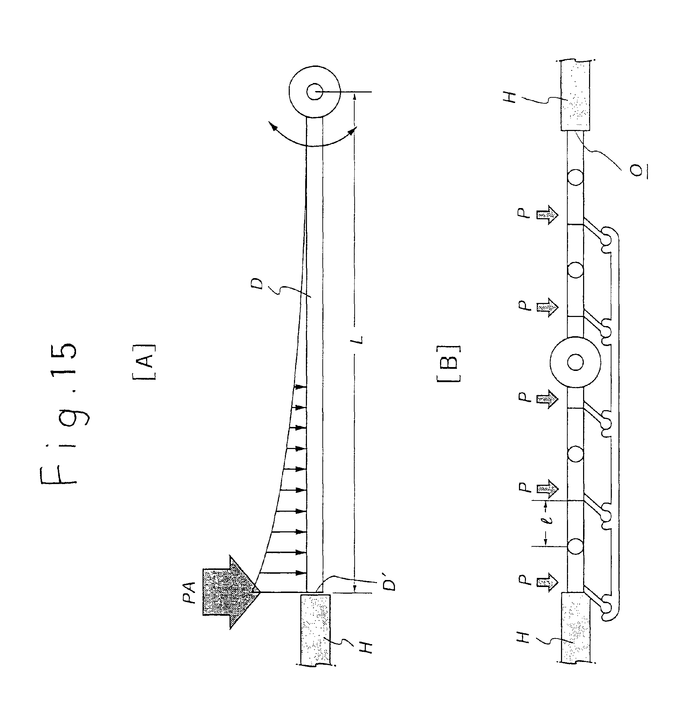

FIGs. 15A and 15B are views illustrating distributions of air pressure or operating torque applied to a door plate of the conventional art and to the micro valve of the present invention, respectively; and

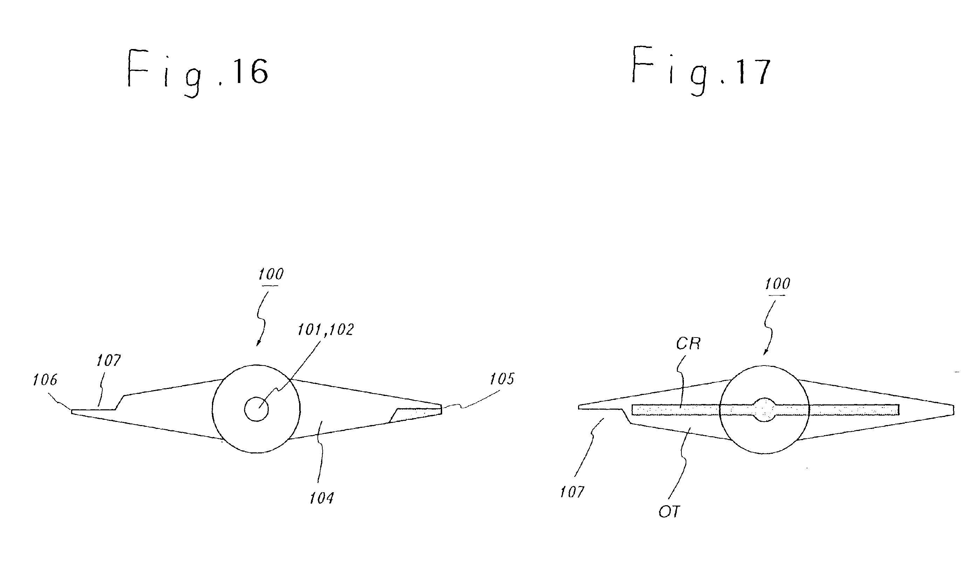

FIGs. 16 and 17 are partial enlarged cross-sectional views independently illustrating appearances of other micro valves which are used in the door assembly for the air conditioning system in accordance with the present invention, taken along the line C-C of FIG. 9.

### DETAILED DESCRIPTION OF PREFERRED EMBODIMENTS

Reference will now be made in greater detail to a preferred embodiment of the invention, an example of which is illustrated in the accompanying drawings. Wherever possible, the same reference numerals will be used throughout the drawings and the description to refer to the same or like parts.

Referring to FIGs. 5 and 6, there is illustrated an air conditioning system for an automobile and a door assembly thereof in accordance with the present invention.

The air conditioning system according to the present invention only has an intake unit IU and a control unit RU between which an air supplying connection part C is disposed, whereby an overall size of the air conditioning system is remarkably reduced. This construction of the present invention provides various advantages due to its driving pattern and mounting scheme for several separate door plates as described below.

The intake unit IU has a blower fan 2 and a motor M as owned by the air conditioning system of the conventional art. The control unit RU is, as shown in FIG. 7, disposed in an air flowing path which is defined in a housing H occupying a single space. The control unit RU has an evaporator 3 and a heater 4 which are located together in the single housing H. A temperature-adjusting guide partition W1 for immediately discharging air flow which passed through the evaporator 3, is arranged in the housing H such that it can be rotated toward a lower space part. Also, a micro guide valve unit GU is mounted in the housing H such that it cooperates with the temperature-adjusting guide partition W1 to control a temperature of air flow.

The heater 4 is compactly received between the temperature-adjusting guide partition W1 and another guide partition W2 which defines a space part for discharging air flow upward.

A temperature-adjusting door plate TC which is the same as that of the conventional art, is disposed at an end of the temperature-adjusting guide partition W1.

As described above, while the temperature-adjusting door plate TC of the present invention can be structured using that of the conventional art, this is because the temperature-adjusting door plate TC is a member which is received in the housing H and an operating distance which is required for opening and closing thereof is not excessively large.

In an air supplying opening which is defined in the housing H, there are mounted, for example, a micro heater valve unit HU which corresponds to the heater door plate HT of the conventional art, a micro vent valve unit VU which corresponds to the vent door plate VT of the conventional art, and a micro defrost valve unit DU which corresponds to the defrost door plate DF of the conventional art.

A door assembly of the air conditioning system, which is called a micro valve 100 in the present invention, is, as shown in FIG. 9, a small door valve member such as a louver, which is of a narrow width B and a long length. The micro valve 100 comprises a valve plate 104, which has substantially a rectangular strip-shaped configuration. The valve plate 104 has a pair of hinge shafts 101 and 102 which are formed at both ends of the valve plate 104, respectively. A driving connection arm 103 is integrally formed on a lower surface of the valve plate 104.

Also, the valve plate 104 has substantially a small thickness and is injection-molded to have a shape of a thin plate thereby to achieve a light weight. It is preferred that a plurality of transverse reinforcing ribs R are projectedly formed on an upper surface and the lower surface of the valve plate 104 and a pair of longitudinal reinforcing ribs R are projectedly formed on the upper and lower surfaces of the valve plate 104, respectively. The transverse and longitudinal reinforcing ribs are formed so that they are orthogonal to each other.

The driving connection arm 103 has a connection neck part 103' and a connection arm part 103" which are integrally formed with each other. The connection neck part 103' projects downward such that it is inclined by a predetermined angle with respect to a vertical line, and the connection arm part 103" is integrally formed at a lower end of the connection neck part 103' such that it extends in a horizontal direction without any inclination.

While micro valves 100 can be installed by defining rectangular openings at the very portions of the housing H where the heater door plate HT, vent door plate VT and defrost door plate DF of the conventional art are installed, forming a pair of hinge holes at both ends of each opening and inserting the pair of hinge shafts 101 and 102 which are formed at both ends of the micro guide valve unit GU, into the pair of hinge holes, respectively, it is preferred in view of productivity and after service that the micro valve is manufactured as a single unit as shown in FIG. 9 to make it possible to separately construct the micro heater valve unit HU corresponding to the heater door plate HT of the conventional art, micro vent valve unit VU corresponding to the vent door plate VT of the conventional art and the micro defrost valve unit DU corresponding to the defrost door plate DF of the conventional art whereby causing the valve units HU, VU and DU to be inserted into and released from mounting holes O of the housing H, respectively, as shown in FIG. 11.

In order to allow a micro valve unit MU to be attached to or detached from a portion of the housing H in the mounting hole O, various fastening systems using a guide rail, a press-fit, a bolt, etc. can be adopted. In this connection, it is preferred that a sealing member is intervened between an outer surface of the micro valve unit MU and the portion of the housing H which defines the mounting hole O, thereby to accomplish airtightness thereat.

In a combination of a plurality of micro valve units MU as shown in FIG. 11, each of which comprises a plurality of micro valves 100 one of which is shown in FIG. 9, the pair of hinge shafts 101 and 102 of each micro valve 100 are inserted into a pair of hinge holes 201 and 202 which are defined in a frame 200 of the micro valve unit MU, and an interlocked hinge bar 210 interconnects a plurality of connection arm parts 103 of a plurality of driving connection arms 103' which extend vertically or inclinedly downward of the micro valve unit MU. The interlocked hinge bar 210 comprises, as shown in FIG. 12, a connection bar 211. A plurality of connection arm receiving grooves 212 are projectedly defined on an upper surface of the connection bar 211 at points where they correspond to the plurality of micro valves 100, respectively. The connection arm parts 103" of the driving connection arms 103 of the micro valves 100 are hingedly inserted into the plurality of connection arm receiving grooves 212, respectively. Only one pair of hinge shafts 101 and 102 which are formed at both ends of one among the plurality of micro valves 100, extend through the pair of hinge holes 201 and 202, respectively, which are defined in the frame 200 of the micro valve unit MU, to project out of the frame 200 thereby defining a pair of driving shaft parts 220.

In other words, the micro valve unit MU has a contour of a cartridge or a magazine in which the plurality of micro valves 100 are combined.

In this construction, if the driving shaft parts 220 are rotated directly by a driving member such as a motor, an actuator or the like or via an interlocked control member such as a plurality of cams as shown in FIG. 2 or the like, the entire micro valves 100 are rotated through the interlocked hinge bar 210 which interconnects the plurality of micro valves 100 one with another, thereby opening or closing the micro valve unit MU.

Referring to FIG. 13, there is shown another embodiment of the interlocked hinge bar 210. In FIG. 13, a plurality of slots 230 are formed in the connection bar 211 which has an integral bar-shaped configuration, such that they extend in a longitudinal direction. It is to be readily understood from FIG. 13 that an interlocked hinge plate 231 having various configurations rendering the same working effect can be used according to the present invention.

In order to smoothly switch air flow through the air conditioning system, the respective micro valves 100 must be brought into airtight contact one with another at their widthwise ends. For that purpose, as shown in FIG. 9, at least one widthwise end of the micro valve 100 which is adjacent an edge portion 105 or 106, is formed with a stepped contact part 107, to prevent air from leaking when the micro valve 100 is closed and noise from being generated.

As shown in FIGs. 16 and 17, it is preferred that the edge portions 105 and 106 of the micro valve 100 are formed by insert-molding or coating using elastic material, or by defining a core part CR using rigid plastic material and insert-molding the core part CR into an elastic material body OT.

Of course, it is to be noted that the driving pattern of the micro valve unit MU which comprises the interlocked plurality of micro valves 100 can be configured with a plurality of driving pinions 300 which are integrally or separately installed at one ends of the plurality of micro valves 100 and a driving rack 301 which cooperates with the plurality of driving pinions 300, as shown in FIG. 14, whereby the same working effect is obtained as in the above embodiment.

In the air conditioning system for an automobile and the door assembly thereof which are realized by the above construction, due to the fact that a door part adopts the detachable micro valve unit MU which uses the plurality of micro valves 100 separated one from another, a size of the entire air conditioning system can be reduced.

Accordingly, as shown in FIG. 15, in the conventional air conditioning system which comprises the aforementioned door plates D, because the door plate D cannot but have a structure of a cantilever beam due to a pressure of air flowing through the air conditioning system and a weight of the door plate D, with the cantilever beam having hingedly secured one end, fairly large resisting force is required against a total air pressure PA. Also, in the conventional air conditioning system, because the total air pressure PA is multiplied by an arm length L of the door plate D, fairly large driving torque is required to drive the door plate D. Also, since severe noise is generated in a contact area between an end of the door plate and the housing, the overall size of the entire air conditioning system cannot but be enlarged and the construction needed for driving the air conditioning system cannot but be complicated.

On the contrary, in the micro valve 100 of the micro valve unit MU which is adopted according to the present invention, as shown in FIG. 15B, a distributed air pressure P is applied to each of the plurality of micro valves 100 which are spaced apart one from another, and an arm length 1 of each micro valve 100 is considerably reduced when compared to the door plate D of the conventional art, thereby to remarkably decrease required driving torque.

This means that since the driving force required for driving the micro valve unit MU in the practical use is reduced, power consumption is lessened and a driving mechanism is also structurally simplified.

In addition, because the driving operation for each micro valve 100 is smoothly carried out, advantages are provided in that operating noise is hardly generated. Also, since the driving torque for each micro valve 100 is reduced, it is possible to establish a stop mode at a middle position between an opening mode and a closing mode, whereby air conditioning operation can be implemented under various air conditioning modes.

By reducing the overall size of the air conditioning system, constructing the micro valve unit MU, as shown in FIGs. 6 through 11, such that it can constitute the micro heater valve unit HU, micro vent valve unit VU and micro defrost valve unit DU, symmetrically disposing a plurality of micro valve units MU at both sides of a center line K of a corresponding portion of the housing H, and arranging a plurality of driving mechanisms which correspond to the plurality of micro valve units, respectively, structural characteristics are obtained as described below.

As shown in FIG. 8, multiple air conditioning operations in which a driver seat and a passenger seat can be differently air-conditioned, are ensured in that the center line K of the control unit RU of the present invention, that is, center portions of the micro vent valve unit VU and the micro defrost valve unit DU each of which comprises the pair of micro valve unit MU, are aligned with a center line VC of the automobile, and the micro vent valve unit VU and the micro defrost valve unit DU are separately driven by different driving mechanisms and control mechanisms, whereby it is possible to establish an air conditioning mode which suits driver s and passenger s taste.

Also, as can be readily seen from FIG. 8, in the case that the air conditioning system is selectively installed to allow other specific arrangements which depend on features of the automobile, for example, an ABS brake system, an air bag, etc. to be disposed below the instrument panel P, if desired, the intake unit IU RHD which is mounted rightward of the control unit RU, can be placed leftward of the control unit RU as being the intake unit IU LHD by opening an air supplying connection part C which is held closed at ordinary times, whereby the specific arrangements having various shapes can be effectively mounted and a single air conditioning system can be commonly used for many kinds of automobiles. For this purpose, it is preferred that the housing H is formed such that an auxiliary air supplying part PC which can be airtightly connected with an auxiliary air supplying connection part C is integrally formed with the housing H on the other side of the control unit RU, and the auxiliary air supplying part PC is closed at ordinary times and opened when desired.

In the embodiment of the present invention as described above, although a construction in which a plurality of plate-shaped valves are rotated in an interlocked manner is disclosed, if the same working effect is obtained, it is possible for the plurality of valves to have various constructions such that they can be controlled in an interlocked manner.

As described above, by the air conditioning system for an automobile and the door assembly thereof according to the present invention, advantages are provided in that since a layout of the air conditioning system which has an improved structure and a plurality of micro valve units which render the layout are provided, an overall size of the air conditioning system can be remarkably reduced, it is possible to implement an air conditioning operation under several air conditioning modes, driving power is saved, and various application shapes can be adopted.

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. An air conditioning system for an automobile, having a blower fan (2), an evaporator (3), a heater (4) and a door assembly which are disposed in an air conditioning passage defined by a plurality of air conditioning cases, the door assembly controlling air flow through an air supplying opening into a passenger compartment of the automobile, the air conditioning system comprising:
an intake unit (IU) as being an intake part; and
a control unit (RU) as being a temperature adjusting control part, the intake unit and the control unit being connected with each other by an air supplying connection part (C) as being intermediate connection means, such that their leftward and rightward positions can be selected.

2. An air conditioning system according to claim 1, wherein
the intake unit (IU) has the blower fan (2) and a motor (M) therefor; and
the control unit (RU) has the evaporator (3) and the heater (4) located in an air flowing path defined in a housing (H) which occupies a single space, and
a guide partition wall (W1) for allowing air passing through the evaporator (3) to flow toward or outside the heater (4).

3. An air conditioning system according to claim 2, wherein
the control unit (RU) has first and second door members which are disposed in front of the heater (4) and between the guide partition wall (W1) and a discharging part of the housing (H), respectively, to cooperate with the guide partition wall thereby to control the temperature of air.

4. An air conditioning system according to claim 3, wherein
the control unit (RU) has door means (100) detachably provided in a plurality of mounting holes (0) defined in the discharging part of the housing (H).

5. An air conditioning system according to claim 3, wherein
the control unit (RU) has a door unit detachably provided in a plurality of mounting holes (O) defined in the discharging part of the housing (H), the door unit comprising a plurality of micro valve units (MU) of a cartridge or magazine-shaped contour, each micro valve unit (MU) having a plurality of plate-shaped door members (104) which are separated one from another and have a reduced rotation radius.

6. An air conditioning system according to any one of the claims 1 to 5, further comprising:
an auxiliary air supplying part (PC) for allowing the intake unit (IU) to be selectively mounted leftward or rightward of the control unit by connecting two air supplying connection parts (C) to both sides of the control unit (RU), respectively, thereby to provide the air flowing path.

7. A door assembly of an air conditioning system for an automobile, the door assembly being provided at a discharging end of a housing (H) of the air conditioning system for controlling air flow therethrough, the door assembly comprising:
a plurality of micro valve units (MU) detachably mounted in a plurality of mounting holes (O), respectively, defined in the discharging end of the housing (H), each micro valve unit (MU) having a combination of a plurality of micro valves (100), each micro valve comprising a strip-shaped valve plate (104) to both ends of which two hinge shafts (101, 102) are secured, respectively, and which serves as a door valve member having predetermined width and length, the plurality of micro valves (100) being controlled in their rotation in an interlocked manner.

8. A door assembly according to claim 7, wherein
each micro valve (100) being a single detachable element which is rotatably fixed via the hinge shafts (101, 102) in a frame (200) constituting the micro valve unit.

9. A door assembly according to claim 7 or 8, wherein the plurality of micro valves (100) are rotated in the interlocked manner through a plurality of driving connection arms (103) which are integrally formed with lower surfaces thereof, respectively, to extend downward, by a separate interlocked hinge bar (211) which is hingedly connected to the plurality of driving connection arms (103).

10. A door assembly according to any one of the claims 7 to 9, wherein the plurality of micro valves (100) are rotated in the interlocked manner through a plurality of driving pinions (300) which are integrally secured to one end each thereof, respectively, by a driving rack (301) which is meshed with the plurality of driving pinions (300).

11. A door assembly according to any one of the claims 7 to 10, wherein the plurality of micro valves (100) are collectively provided in the frame (200) of the micro valve unit (MU) and are connected one with another by the interlocked hinge bar (210); and by driving the hinge shaft (220) extending from one end of one micro valve, the entire micro valves are rotated to be opened or closed.

12. A door assembly according to any one of the claims 7 to 11, wherein the valve plate (104) constituting the micro valve (100) of the micro valve unit (MU) is an injection-molded plate and is integrally formed with a plurality of reinforcing ribs (R) which project from upper and lower surfaces thereof.

13. A door assembly according to any one of the claims 7 to 12, wherein at least one widthwise end of the valve plate (104) constituting the micro valve (100) of the micro valve unit (MU) is formed with a stepped contact part (107) which can be brought into contact with an adjoining valve plate to ensure a closing of the micro valve (100).

14. A door assembly according to any one of the claims 7 to 13, wherein two elastic elements (105, 106) are provided in both widthwise ends of the micro valve (100), respectively, by insert-molding or coating.

15. A door assembly according to any one of the claims 7 to 14, wherein the micro valve (100) is made by forming a core part (CR) using rigid plastic material and by insert-molding the core part (CR) into an elastic material body (OT).

16. A door assembly according to any one of the claims 7 to 15, wherein the plurality of micro valve units (MU) are disposed such that they are symmetrized with a center line (K) of the housing (H) aligned therebetween, the housing (H) constituting a control unit of the air conditioning system.

17. A door assembly according to any one of the claims 7 to 16, wherein each micro valve unit (MU) has a separate driving mechanism therefor.

18. A door assembly according to claim 7, wherein the plurality of micro valve units (MU) including at least one micro heater valve unit (HU) serving as a heater door plate (HT), at least one micro vent valve unit (VU) serving as a vent door plate (VT) and at least one micro defrost valve unit (DU) serving as a defrost door plate (DF) which are disposed in an air supplying opening defined in the housing (H).

19. A door assembly according to any one of the claims 7 to 18, wherein when the micro valve unit (MU) is mounted in the mounting hole (O) defined in the housing (H), a sealing member is intervened between an edge of the housing (H) defining the mounting hole (O) and the micro valve unit (MU), to perform a sealing function.
